# EUROPÄISCHE PATENTSCHRIFT

(11) **EP 0 981 695 B1**
(45) Veröffentlichungstag und Bekanntmachung des Hinweises auf die Patenterteilung: **01.10.2003**
(21) Anmeldenummer: 99910270.0
(22) Anmeldetag: 24.02.1999
(51) Int. Cl.: F16D 65/092

(54) **BREMSBELAGHALTERUNG, INSBESONDERE FÜR SCHIENENFAHRZEUGE**
BRAKE LINING MOUNTING, ESPECIALLY FOR RAIL VEHICLES
FIXATION DE GARNITURE DE FREIN DESTINEE NOTAMMENT A DES VEHICULES FERROVIAIRES

(30) Priorität: 05.03.1998 DE 19809513
(43) Veröffentlichungstag der Anmeldung: 01.03.2000
(73) Patentinhaber: KNORR-BREMSE Systeme für Schienenfahrzeuge GmbH, 80809 München (DE)
(72) Erfinder: WIRTH, Xaver, D-85737 Ismaning (DE); SCHÖRWERTH, Mathias, D-82538 Geretsried (DE); WEISS, Robert, D-85757 Karlsfeld (DE)
(86) Internationale Anmeldenummer: EP9901187
(87) Internationale Veröffentlichungsnummer: WO99045291

(56) Entgegenhaltungen:
- EP-A- 0 837 260
- DE-A- 3 908 287
- DE-A- 4 436 457
- FR-A- 2 365 726
- US-A- 1 941 656

## Beschreibung

Die Erfindung betrifft eine Bremsbelaghalterung nach dem Gattungsbegriff des Patentanspruchs 1.

Bei bekannten Bremsbelaghalterungen, welche eine sogenannte Schwalbenschwanzführung aufweisen, ist für den eingeführten Bremsbelag ein stimseitiger Anschlag und ein nach dem Einschieben des Bremsbelags verschwenkbarer Querriegel vorgesehen. Dieser Querriegel kann auch klappbar oder drehbar am Halter geführt sein. Derartige Halter sind als UIC-Halter bekannt.

Bei einer weiteren bekannten Konstruktion sind im Abstand zur Reibbelaglänge am Halter zwei abgesetzte Zapfen vorgesehen, die bei eingesetztem Belagträger von halbkreisförmigen Ausnehmungen des Trägerblechs hintergriffen werden. Das Lösen des Belagträgers vom Belaghalter wird mittels einer einen Haltelappen des Belagträgers hintergreifenden Riegelfeder des Belaghalters verhindert. Es sind auch Belaghalter bekannt, bei welchen der Belag von zwei Zapfen gehalten wird; hierbei befindet sich ein Zapfen an einem schwenkbaren Riegel, der zum Belagtausch geöffnet werden kann.

Den Standardlösungen ist gemeinsam, dass die Reib- bzw. Bremsbeläge durch Anschläge an beiden Enden gehalten werden. Der derart "eingeschlossene" Belag muss folglich mit einem größeren Längsspiel versehen sein, so dass er beim Erwärmen (mehrere 100° C beim Bremsen) nicht eingeklemmt wird. Halterbeschädigungen oder Verwerfungen des Belags wären die Folge. Die diesem Sachverhalt Rechnung tragenden größeren Spiele in dynamisch belasteten Bauteilen sind aber der Grund für vorzeitigen Verschleiß der sich berührenden Teile; zudem ist hierbei mit verstärkten Klappergeräuschen zu rechnen.

In der nachveröffentlichten EP-A-0 837 260 ist eine Bremsbelagshalterung für Schienenfahrzeuge aufgezeigt, bei der ein Belaghalter einen einen Reibbelag tragenden Belagträger führt, welcher in montierter Lage am Belaghalter diesen zu beiden Seiten mittels aufschiebbaren Laschen wenigstens teilweise umgreift und in aufgeschobener Lage mittels eines Verschlusses gegenüber dem Belaghalter arretierbar ist. Der Verschluss besteht aus einem an einem der stirnseitigen Enden des Belaghalters geführten senkrecht zum Belaghalter durch dessen Sohle verschiebbaren Bolzen. Der Bolzen kann bei am Belaghalter aufgeschobenem Belagträger in eine am zugeordneten stimseitigen Ende des Belagträgers befindliche Öffnung eingeführt werden".

Ausgehend von den in den Absätzen 2 bis 4 beschriebenen Standardlösungen besteht die Aufgabe der Erfindung darin, eine Bremsbelaghalterung der gattungsgemäßen Art so auszugestalten, dass der Bremsbelag in seiner Zuordnung zum Bremsbelaghalter den vorgenannten Problemen nicht ausgesetzt ist. Gleichzeitig soll die Möglichkeit geschaffen werden, den den Bremsbelag tragenden Belagträger in einfacher und schneller und zudem verliersicherer Weise am Belaghalter zu montieren bzw. von diesem demontieren zu können.

Diese Aufgabe wird mit Bremsbelaghalterungen mit den Merkmalen des Anspruchs 1 wie auch mit Bremsbelagshalterungen mit den Merkmalen des Anspruchs 4 gelöst.

Durch Verwendung eines einzelnen Bolzens an einem der stimseitigen Enden des Belaghalters ist die Fixierung, also unverschiebliche Arretierung des Belagträgers gegenüber dem Belaghalter gewährleistet. Infolge der zwischen dem Belagträger und dem Belaghalter existierenden Führungen, welche im gegenseitigem Eingriff sind, kann der Belagträger in einfacher Weise bei in Löseposition befindlichem Bolzen auf den Belaghalter aufgeschoben werden, bis die am stimseitigen Ende des Belagträgers befindliche Öffnung zur Deckung mit dem Bolzen gelangt und dieser unter Federkraft in seine Arretierposition freigegeben werden kann. Die Demontage des Belagträgers erfolgt in entsprechend einfacher Weise nach Herausheben des Bolzens aus seiner Arretierposition. Vorzugsweise ist der Belagträger in seiner Konfiguration symmetrisch ausgebildet, d. h. an jedem der beiden stimseitigen Enden befindet sich die zur Aufnahme des Bolzens dienende Öffnung; dies bedeutet, dass der Belagträger mit Bremsbelag sowohl in Linksais auch in Rechtsausführung an Belaghaltern verwendbar ist, wobei in Montageposition jeweils eine der Öffnungen der stimseitigen Enden frei bleibt.

Das Lösen des Bolzens, also das Herausheben desselben aus der Öffnung des Belagträgers, kann in einfacher Weise manuell oder mittels eines Hebelwerkzeugs bewerkstelligt werden. Zur Ausübung einer Federkraft am Bolzen sind vorzugsweise ein Federbügel und eine innerhalb des Belaghalters gegenüber dem Bolzen wirkende Feder vorgesehen, was einen Sicherheitsaspekt bei der Arretierung des Belagträgers darstellt. Vorteilhafte Ausgestaltungen und Weiterbildungen sind in den weiteren Patentansprüchen aufgeführt.

Die Erfindung ist nachfolgend anhand von Ausführungsbeispielen unter Bezugnahme auf die beigefügte Zeichnung erläutert.
- Figur 1: ist eine teilweise geschnittene Teil-Seitenansicht des stimseitigen Endes eines Belaghalters mit einem an diesem geführten Belagträger, unter Darstellung des den Verschluss zwischen Belaghalter und Belagträger bildenden Bolzens, wobei die Position des Federbügels mit ausgezogenen Linien in Arretierposition und mit strichpunktierten Linien in Löseposition wiedergegeben ist;
- Figur 2: ist eine Teildraufsicht der Anordnung nach Figur 1, ohne Darstellung des Belagträgers;
- Figur 3: ist eine der Figur 1 vergleichbare Ansicht einer weiteren Ausführungsform nach der Erfindung; und
- Figur 4: ist eine der Fig. 1 und Fig. 3 vergleichbare Ansicht einer weiteren Ausführungsform nach der Erfindung.

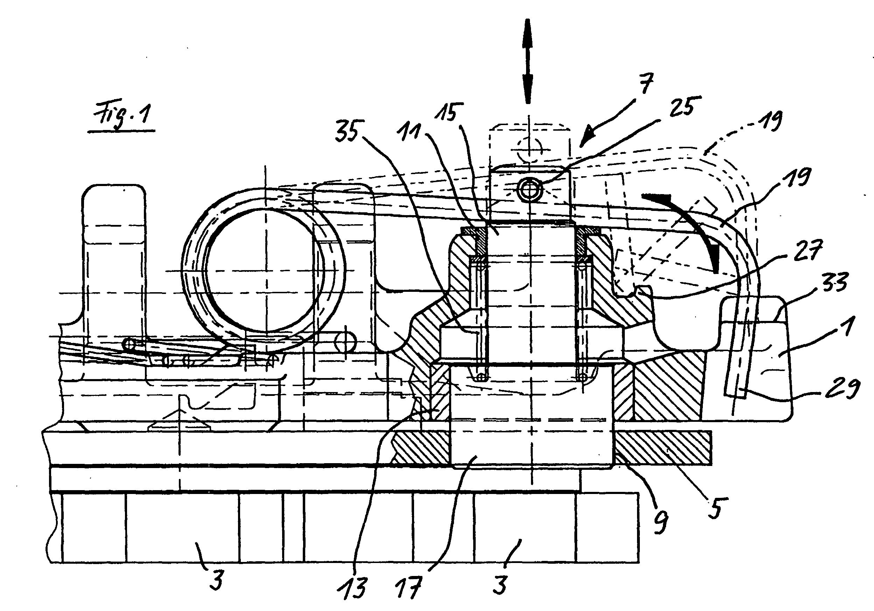

In Figur 1 der Zeichnung ist in teilweise geschnittener Teilseitenansicht ein Belaghalter 1 dargestellt, an welchem ein einen Reibbelag 3 tragender Belagträger 5 gehaltert ist. Der Reibbelag 3 besteht in einer im einzelnen nicht näher erläuterten Weise aus mehreren Belagelementen, welche am Belagträger 5 allseitig schwenkbar unter Federverspannung angebracht sind. Der Belagträger 5 ist mittels Nuten bildender Laschen am Belaghalter 1 aufschiebbar; hierbei umgreifen die Laschen zu beiden Seiten des Belaghalters vorzugsweise bogenförmig sich erstreckende Führungsleisten, derart, daß der Belagträger mit den an ihm gehalterten Belagelementen von einer der Stimseiten, vorzugsweise der schienen-zugewandten Stimseite des Belaghalters ausgehend an diesem aufschiebbar ist.

Gemäß Figur 1 ist am Belaghalter ein Bolzen 7 geführt, welcher unter Federverspannung eine Öffnung 9 des Belagträgers 5 in dessen aufgeschobener Position durchsetzt, derart, daß der Belagträger gegenüber Verschieben am Belaghalter abgesichert ist. Der Bolzen 7 ist in seiner Höhenlage bezüglich des Belaghalters gegen Federspannung verlagerbar und ist im dargestellten Ausführungsbeispiel in einer stufenweise abgesetzten Bohrung des Belaghalters geführt. Die Stufenbohrung ist durch Buchsen 11 und 13 gebildet, von welchen die Buchse 11 von der Oberseite des Belaghalters 1 eingepreßt ist und zur Führung eines schmalen Bolzenabschnitts 15 dient, während der durch die Unterseite des Belaghalters hindurch verschiebbare, breitere Bolzenabschnitt 17 in der Buchse 13 an der Unterseite des Belaghalters angeordnet ist.

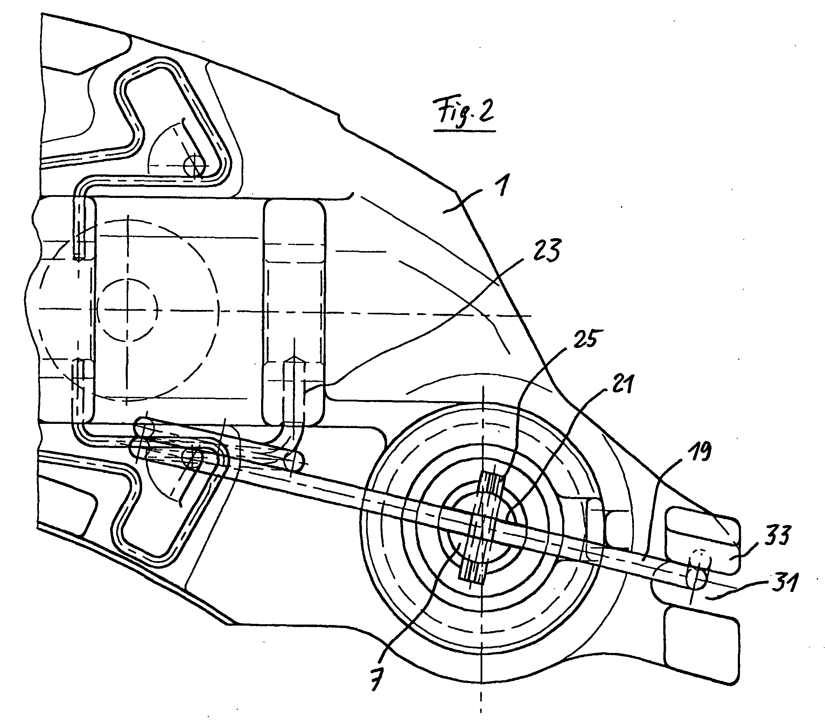

An der Oberseite des Bolzens 7 wirkt ein Federbügel 19 (Figur 1 und 2), welcher vorzugsweise mittig in einen Schlitz 21 an der Oberseite des Bolzens eingesetzt ist. Der in Figur 1 linke Endabschnitt des Federbügels 19 ist zweifach gewendelt, wobei das Ende des Federbügels in eine Bohrung 23 (Figur 2) des Belaghalters eingesetzt ist. Durch diese Formgebung des Federbügels in seinem gemäß Figur 1 linken Abschnitt weist der Federbügel in seinem rechten Abschnitt eine nach unten gerichtete Verspannung auf, derart, daß der Federbügel die Neigung besitzt, den Bolzen 7 nach unten gerichtet zu verschieben, so, daß er sich in die Öffnung 9 des Belagträgers erstreckt und diesen hierdurch gegenüber Verschiebung arretiert.

Der Federbügel 19 ist einerseits durch die Basis des ihn aufnehmenden Schlitzes 21 im Bolzenkopf und andererseits durch einen den Bolzenkopf durchsetzenden Sicherungsstift 25 gefangen. In der Darstellung nach Figur 1 erstreckt sich der Sicherungsstift 25 also oberhalb des Federbügels, so daß der Bolzen aus der in Figur 1 dargestellten Arretierposition nach oben gerichtet in die strichpunktiert dargestellte geöffnete Lage angehoben werden kann, wenn mittels eines Werkzeugs oder manuell der Federbügel 19 an seinem gemäß Darstellung rechten Ende nach oben gerichtet angehoben wird. Der Federbügel 19 ist demnach einer zweifachen Funktion unterstellt, d. h. er vermag gegenüber dem Bolzen 7 eine nach unten gerichtete Kraft auszuüben und er dient gleichzeitig zum Herausheben des Bolzens aus seiner Arretierposition.

Das Anheben des Federbügels kann nach Maßgabe der zu überwindenden Federkraft manuell, also ohne Werkzeug, aber auch unter Zuhilfenahme z. B. eines Flachwerkzeugs erfolgen, welches gemäß strichpunktierter Darstellung in Figur 1 an einer Schulter 27 an der Oberseite des Belaghalters eingesetzt und gegenüber dem Federbügel wirkend gedreht wird, bis dieser die in Figur 1 strichpunktiert wiedergegebene angehobene Position erreicht hat. Um den Federbügel in der angehobenen Position zu halten kann das Ende 29, welches in abgesenkter Lage einen Schlitz 31 am Ende des Belaghalters durchsetzt, an einem Absatz 33 seitlich bezüglich des Schlitzes 31 aufgesetzt werden. Es ist hierbei möglich, dem Ende 29 des Federbügels 19 zusätzlich eine gewisse seitliche Verspannung zu vermittelt, derart, daß der Federbügel automatisch die Sperrlage auf dem Absatz 33 einnimmt, wenn das Ende 29 aus dem Schlitz 31 herausgehoben wird.

Gemäß Figur 1 wirkt am Bolzen 7 eine zweite Feder 35, welche sich einerseits an der Buchse 11 und andererseits auf der Oberseite des breiteren Bolzenabschnitts 17 abstützt und wie der Federbügel 19 die Neigung besitzt, den Bolzen 7 in die in Figur 1 dargestellte Arretierposition gegenüber dem Belagträger zu verschieben. Die Feder 35 dient zusätzlich zum Federbügel 19 dazu, den Bolzen 7 in vorstehend erläuterter Weise in seiner Arretierlage zu halten, gleichzeitig vermittelt die Feder 35 eine gewisse Sicherheitsfunktion, wenn der Federbügel 19 im Betrieb brechen sollte. Es ist hierdurch immer sichergestellt, daß der Bolzen 7 die Arretierlage gegenüber dem Belagträger nicht verlassen kann, d. h. ein unbeabsichtigtes Lösen des Belagblechs bzw. Belagträgers vom Belaghalter ist absolut sicher ausgeschlossen.

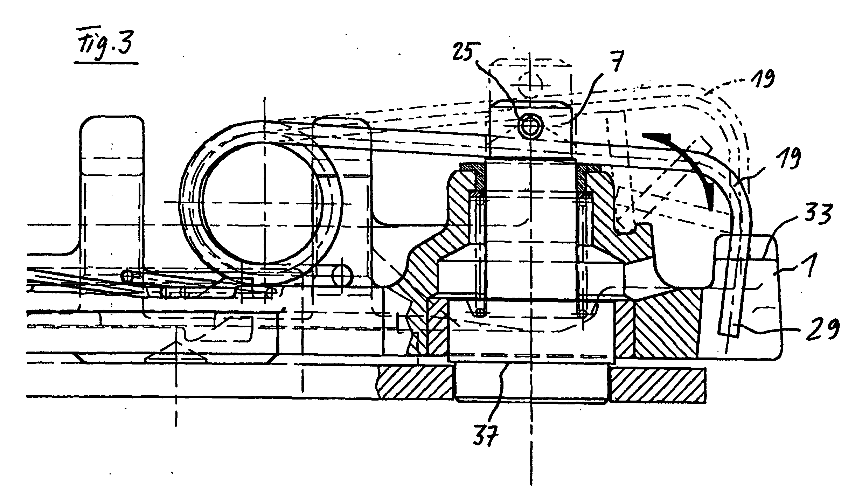

Bei der in Figur 3 dargestellten Variante des Bolzens ist an diesem im Bereich der Sohle des Belaghalters 1 ein Absatz 37 vorgesehen. Der Absatz 37 besitzt einen Durchmesser, welcher etwas größer ist als der das Bolzenende aufnehmende Durchmesser der Öffnung 9 im Belagträger 5. Dies bedeutet, daß der Bolzen durch die Bohrung im Belagträger nicht hindurchgleiten kann, wenn an der Oberseite des Bolzens, d. h. am Bolzenkopf der Federbügel und der Sicherungsstift ausgehängt oder zerstört sind. Es wird in jedem Fall vermieden, daß der Bolzen durch die Öffnung im Belagträger hindurchtaucht und gegenüber der Rückseite des (in Fig. 3 nicht dargestellten) Reibbelags einwirkt. Darüber hinaus definiert der Absatz 37 genau die Eintauchtiefe des Bolzens in der Öffnung 9 des Belagträgers. Eine Kollision mit der Rückseite der den Reibbelag bildenden Belagelemente etc. wird somit auf einfache Weise verhindert. Grundsätzlich ist es auch möglich, an der Oberseite des Bolzens einen z. B. gegenüber der Buchse 13 zur Anlage gelangenden Absatz in Form eines Sprengrings etc. vorzusehen, welcher die Eintauchtiefe des Bolzens bestimmt. Auch der Federbügel 19 vermag diesem Zweck dienlich zu sein, wenn er sich in seiner abgesenkten Lage auf der Oberseite der Buchse 13 abstützt und an seiner Rückseite den unter Verspannung durch die Feder 35 nach unten gerichtet gezogenen Sicherungsstift abfängt.

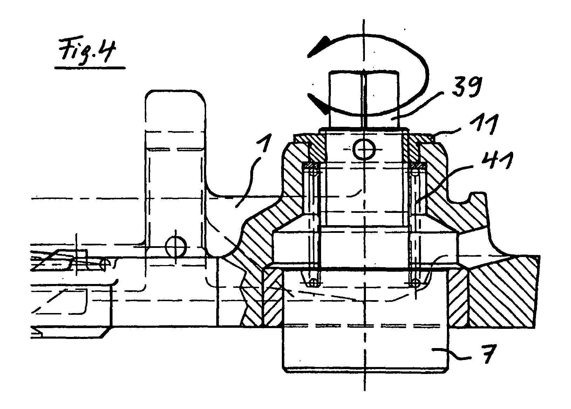

In Figur 4 der Zeichnung ist ein Ausführungsbeispiel dargestellt, bei welchem der Bolzen 7 gegenüber der ihn aufnehmenden Bohrung im Belaghalter mittels eines nicht selbsthemmenden Bewegungsgewindes verschraubt ist, im vorliegenden Fall gegenüber der Buchse 11. Eine Feder 41 drückt unter Drohung den Bolzen 7 in die Öffnung 9. Der Bolzenkopf ist als ein Mehrkant 39 ausgebildet, an welchem ein Werkzeug ansetzbar ist, um den Bolzen 7 zum Zwecke des Anhebens aus der Öffnung 9 zu drehen.

### Bezugszeichenliste

- 1 =: Belaghalter
- 3 =: Reibbelag
- 5 =: Belagträger
- 7 =: Bolzen
- 9 =: Öffnung
- 11 =: Buchse
- 13 =: Buchse
- 15 =: Bolzenabschnitt
- 17 =: Bolzenabschnitt
- 19 =: Federbügel
- 21 =: Schlitz
- 23 =: Bohrung
- 25 =: Sicherungsstift
- 27 =: Schulter
- 29 =: Ende
- 31 =: Schlitz
- 33 =: Absatz
- 35 =: Feder
- 37 =: Absatz
- 39 =: Mehrkant
- 41 =: Feder

## Patentansprüche

1. Bremsbelaghalterung, insbesondere für Schienenfahrzeuge, mit einem an einem Belaghalter geführten, einen Reibbelag tragenden Belagträger, welcher in montierter Lage am Belaghalter diesen zu beiden Seiten mittels aufschiebbarer Laschen wenigstens teilweise umgreift und in aufgeschobener Lage mittels eines Verschlusses gegenüber dem Bremsbelaghalter arretierbar ist, wobei der Verschluß aus einem an einem der stirnseitigen Enden des Belaghalters (1) geführten, senkrecht zum Belaghalter durch dessen Sohle verschiebbaren Bolzen (7) besteht, welcher bei am Belaghalter (1) aufgeschobenem Belagträger (5) in eine am zugeordneten stimseitigen Ende des Belagträgers befindliche Öffnung (9) einführbar ist, **dadurch gekennzeichnet, dass** der Bolzen (7) einen Anschlag aufweist, der ein Herausfallen des Bolzens (7) aus dem Belaghalter (1) in die dem Belagträger (5) abgewandte Richtung verhindert.

2. Bremsbelaghalterung nach Anspruch 1, **gekennzeichnet durch** folgende Merkmale:
a) der Bolzen (7) ist bei in Montageposition befindlichem Belagträger (5) unter Federverspannung in die am Belagträger ausgebildete Öffnung (9) verschiebbar; und
b) der Bolzen (7) ist zum Zwecke des Lösens des Belagträgers (5) gegen die Federverspannung aus der Öffnung (9) des Belagträgers heraushebbar.

3. Bremsbelaghalterung nach Anspruch 1, **gekennzeichnet durch** folgende Merkmale:
a) ein Federbügel (19) wirkt unter Eigenspannung am Bolzenkopf ein, derart, daß er den Bolzen in die Arretierposition in die Öffnung (9) des Belagträgers (5) zu verschieben vermag; und
b) der Federbügel (19) ist unter Mitnahme des Bolzens (7) in eine Löseposition anhebbar, in welcher der Bolzen aus der Öffnung (9) des Belagträgers herausgehoben ist.

4. Bremsbetaghalterung, insbesondere für Schienenfahrzeuge, mit einem an einem Belaghalter geführten, einen Reibbelag tragenden Belagträger, welcher in montierter Lage am Belaghalter diesen zu beiden Seiten mittels aufschiebbarer Laschen wenigstens teilweise umgreift und in aufgeschobener Lage mittels eines Verschlusses gegenüber dem Bremsbelaghalter arretierbar ist, wobei der Verschluß aus einem an einem der stimseitigen Enden des Belaghalters (1) geführten, senkrecht zum Belaghalter durch dessen Sohle verschiebbaren Bolzen (7) besteht, welcher bei am Belaghalter (1) aufgeschobenem Belagträger (5) in eine am zugeordneten stimseitigen Ende des Belagträgers befindliche Öffnung (9) einführbar ist, **gekennzeichnet durch** folgende Merkmale:
a) ein Federbügel (19) wirkt unter Eigenspannung am Bolzenkopf ein, derart, daß er den Bolzen in die Arretierposition in die Öffnung (9) des Belagträgers (5) zu verschieben vermag; und
b) der Federbügel (19) ist unter Mitnahme des Bolzens (7) in eine Löseposition anhebbar, in welcher der Bolzen aus der Öffnung (9) des Belagträgers herausgehoben ist.
c) der Federbügel (19) ist in einen Schlitz (21) des Bolzenkopfs eingesetzt und zwischen dem Schlitzboden einerseits und einem am Bolzenkopf einführbaren Sicherungsstift (25) gefangen;
d) ein Endabschnitt des Federbügels (19) ist am Belaghalter fixiert;
e) der bezüglich des Bolzens entgegengesetzte Endabschnitt des Federbügels (19) ist zwischen angehobener Löseposition und abgesenkter Arretierposition verlagerbar.

5. Bremsbelaghalterung nach Anspruch 3 oder 4, **dadurch gekennzeichnet, daß** der freibewegliche Endabschnitt des Federbügels (19) in angehobener Löseposition auf der Oberseite des Belaghalters (1) arretierbar ist.

6. Bremsbelaghalterung nach Anspruch 4 oder 5, **dadurch gekennzeichnet, daß** das Ende (29) des freien Endabschnitts des Federbügels (19) in angehobener Löseposition an einem Absatz (33) auf der Oberseite des Belaghalters arretierbar ist.

7. Bremsbelaghalterung nach einem der vorangehenden Ansprüche, **dadurch gekennzeichnet, daß** der Bolzen (7) in einer stufenweise abgesetzten Bohrung des Belaghalters (1) geführt ist, derart, daß der der Öffnung (9) zugewandte Bolzenabschnitt (17) einen größeren Durchmesser besitzt als der den Federbügel (19) tragende, entgegengesetzte Bolzenabschnitt (15), welcher als Bolzenkopf endet.

8. Bremsbelaghalterung nach Anspruch 7, **dadurch gekennzeichnet, daß** die beiden Bolzenabschnitte (15, 17) des Bolzens (7) in im Belaghalter eingepreßten Buchsen (11, 13) verschiebbar geführt sind.

9. Bremsbelaghalterung nach einem der vorangehenden Ansprüche, **gekennzeichnet durch** eine zweite, den Bolzen (9) in Richtung der Öffnung (9) des Belagträgers verspannende Feder (35).

10. Bremsbelaghalterung nach Anspruch 9, **gekennzeichnet durch** folgende Merkmale:
a) die Feder (35) umgibt den Bolzenabschnitt (15) kleineren Durchmessers; und
b) die Feder stützt sich einerseits an der Unterseite der den Bolzenabschnitt (15) führenden Buchse (11) und andererseits an der Oberseite des Bolzenabschnitts (17) von größerem Durchmesser ab, derart, daß die Feder (35) mit gleicher Wirkrichtung wie der Federbügel (19) den Bolzen (7) in die im Belagträger vorgesehene Öffnung (9) zu verspannen vermag.

11. Bremsbelaghalterung nach einem der vorangehenden Ansprüche, **dadurch gekennzeichnet, daß** die Eintauchtiefe des Bolzens (7) bezüglich der im Belagträger vorgesehenen Öffnung (9) durch einen am Bolzen ausgebildeten Absatz (37) bestimmt ist.

12. Bremsbelaghalterung nach einem der vorangehenden Ansprüche, **dadurch gekennzeichnet, daß** die zweite Feder (35) durch Anheben des Bolzens (7) mittels des Federbügels (19) spannbar ist.

13. Bremsbelaghalterung nach einem der vorangehenden Ansprüche, **dadurch gekennzeichnet, daß** der Bolzen (7) am unteren, schienenzugewandten Ende des Belaghalters (1) an diesem geführt ist.

14. Bremsbelaghalterung nach Anspruch 1, **dadurch gekennzeichnet, daß** der Bolzen (7) mit einer Gewindebohrung des Belaghalters (1) verschraubt und durch Drehen in die Öffnung (9) des Belagträgers einführbar und aus der Öffnung heraushebbar ist.

15. Bremsbelaghalterung nach Anspruch 14, **gekennzeichnet durch** eine den Bolzen (7) umgebende, diesen in Richtung der Öffnung (8) des Belagträgers verspannende Feder (41).

## Claims

1. A brake lining holding device, in particular for rail vehicles, having a fining carrier, mounted on a lining holder and carrying a friction lining, which when fitted to the lining holder at least partially encompasses it on both sides by means of slip-on clips and when slipped on can be blocked against the brake lining holder by means of a rock, the lock consisting of a bolt (7) mounted on one of the front ends of the lining holder (1) which can be moved perpendicular to the lining holder through the base thereof and which when the lining carrier (5) is pushed onto the lining holder (1) can be introduced into an opening (9) located at the end of the lining carrier at the associated front end of the fining carrier,
**characterised in that**
the bolt (7) has a stop which prevents the bolt (7) from falling out of the lining holder (1) away from the lining carrier (5).

2. A brake lining holding device in accordance with claim 1,
**characterised by** the following features:
a) when the lining carrier (5) is in the fitted position, the bolt (7) can be moved into the opening (9) formed in the lining carrier under spring tension; and
b) the bolt (7) can be lifted out of the opening (9) in the lining carrier against the spring tension in order to release the lining carrier (5).

3. A brake lining holding device in accordance with claim 1,
**characterised by** the following features:
a) a spring clip (19) acts under internal tension on the bolt head in such a manner that it is able to move the bolt into the blocked position in the opening (9) of the fining carrier (5); and
b) the spring clip (19) can be lifted, pulling with it the bolt (7), into a release position in which the bolt is lifted out of the opening (9) in the lining carrier.

4. A brake lining holding device, in particular for rail vehicles, having a lining carrier, mounted on a fining holder and carrying a friction lining, which when fitted to the lining holder at least partially encompasses it on both sides by means of slip-on clips and when slipped on can be blocked against the brake lining holder by means of a lock, the lock consisting of a bolt (7) mounted on one of the front ends of the fining holder (1) which can be moved perpendicular to the lining holder through the base thereof and which when the lining carrier (5) is pushed onto the fining holder (1) can be introduced into an opening (9) located at the end of the lining carrier at the associated front end of the lining carrier,
**characterised by** the following features:
a) a spring clip (19) acts under internal tension on the bolt head in such a manner that it is able to move the bolt into the blocked position in the opening (9) of the fining carrier (5); and
b) the spring clip (19) can be lifted, pulling with it the bolt (7), into a release position in which the bolt is lifted out of the opening (9) in the fining carrier.
c) the spring clip (19) is set in a slit (21) in the bolt head and captured between the base of the slit on one side and a locking pin (25) which can be introduced at the bolt head;
d) an end section of the spring clip (19) is fixed to the lining holder,
e) the end section of the spring clip (19) opposite the bolt can be moved between a lifted release position and a lowered blocking position.

5. A brake lining holding device in accordance with claim 3 or 4,
**characterised in that**
the free-moving end section of the spring clip (19) can be blocked in a lifted release position on the top of the lining holder (1).

6. A brake lining holding device in accordance with claim 4 or 5,
**characterised in that**
the end (29) of the free end section of the spring clip (19) can be blocked in a lifted release position at a shoulder (33) on the top of the lining holder.

7. A brake lining holding device in accordance with one of the preceding claims,
**characterised in that**
the bolt (7) is mounted in a stepped hole in the lining holder (1) in such a manner that the bolt section (17) facing the opening (9) has a greater diameter than the opposite bolt section (15) which carries the spring clip (19) which ends in a bolt head.

8. A brake lining holding device in accordance with claim 7,
**characterised in that**
both bolt sections (15, 17) of the bolt (7) are mounted in bushes (11, 13) set in the lining holder.

9. A brake lining holding device in accordance with one of the preceding claims,
**characterised by**
a second spring (35) which tensions the bolt (9) in the direction of the opening (9) in the lining carrier.

10. A brake lining holding device in accordance with claim 9,
**characterised by** the following features:
a) the spring (35) surrounds the bolt section (15) of lessor diameter, and
b) the spring is supported on one hand on the underside of the bush (11) horsing the bolt section (15) and on the other on the top of the bolt section (17) of greater diameter in such a manner that the spring (35) is able to tension the bolt (7) into the opening (9) provided in the brake carrier in the same direction as the spring clip (19),

11. A brake lining holding device in accordance with one of the preceding claims,
**characterised in that**
the depth to which the bolt (7) is inserted into the opening (9) provided in the lining carrier is determined by a shoulder (37) formed on the bolt.

12. A brake lining holding device in accordance with one of the preceding claims,
**characterised in that**
the second spring (35) can be tensioned by means of the spring clip (19) by lifting the bolt (7).

13. A brake lining holding device in accordance with one of the preceding claims,
**characterised in that**
the bolt (7) is mounted in the lining holder (1) at its lower end facing the rail.

14. A brake lining holding device in accordance with claim 1,
**characterised in that**
the bolt (7) screws into a threaded hole in the lining holder (1) and can be introduced into and withdrawn from the opening (9) by rotating it.

15. A brake lining horsing device in accordance with claim 14,
**characterised by**
a spring (41) which surrounds the bolt (7) and tensions it in the direction of the opening (9) in the lining carrier.

## Revendications

1. Fixation de garniture de frein, notamment pour des véhicules ferroviaires, comprenant un porte-garniture guidé sur un maintien de garniture, portant une garniture de friction et entourant au moins en partie, à l'état monté sur le maintien de garniture, celui-ci des deux côtés au moyen de pattes coulissantes et pouvant être bloqué, à l'état poussé, au moyen d'une fermeture vis-à-vis du maintien de garniture de freins, la fermeture étant constituée d'un boulon (7) guidé sur l'une des extrémités frontales du maintien (1) de garniture, pouvant coulisser perpendiculairement au maintien de garniture à travers sa semelle et pouvant pénétrer lorsque le porte-garniture (5) est poussé sur le maintien de garniture (1) dans une ouverture (9) se trouvant à l'extrémité associée, du côté frontal, du porte-garniture, **caractérisée en ce que** le boulon (7) comporte une butée qui empêche le boulon (7) de tomber du maintien de garniture (1) dans la direction éloignée du porte garniture (5).

2. Fixation de garniture de frein suivant la revendication 1, **caractérisée par** les caractéristiques suivantes :
a) le boulon (7) peut coulisser, lorsque le porte-garniture (5) se trouve en position de montage, sous une tension de ressort, dans l'ouverture (9) constituée sur le porte-garniture : et
b) le boulon (7) peut, en vue de desserrer le porte-garniture (5), être soulevé, à rencontre de la tension du ressort, de l'ouverture (9) du porte-garniture.

3. Fixation de garniture de frein suivant la revendication 1, **caractérisé par** les caractéristiques suivantes :
a) un étrier (19) formant ressort agit sous contrainte propre sur la tête du boulon de façon à pouvoir déplacer le boulon pour le mettre en position de blocage dans l'ouverture (9) du porte-garniture (5) ;
b) l'étrier (19) formant ressort peut être soulevé en entraînant le boulon (7) pour venir dans une position de desserrage, dans laquelle le boulon peut être sorti de l'ouverture (9) du porte-garniture.

4. Fixation de garnitures de frein, notamment pour des véhicules ferroviaires, comprenant un porte garniture guidé sur un maintien de garniture, portant une garniture de friction et entourant au moins en partie, à l'état monté sur le maintien de garniture, celui-ci des deux côtés au moyen de pattes coulissantes et pouvant étre bloqué, à l'état poussé, au moyen d'une fermeture vis-à-vis du maintien de garniture de freins, la fermeture étant constituée d'un boulon (7) guidé sur l'une des extrémités frontales du maintien (1) de garniture, pouvant coulisser perpendiculairement de garniture à travers sa semelle et pouvant pénétrer lorsque le porte-garniture (5) est poussé sur le maintien de garniture (1) dans une ouverture (9) se trouvant à l'extrémité associée, du côté frontal, du porte-garniture, **caractérisée par** les caractéristiques suivantes:
a) un étrier (19) formant ressort agit sous contrainte propre sur la tête du boulon de façon à pouvoir déplacer le boulon pour le mettre en la position de blocage dans l'ouverture (9) du porte-garniture (50) ;
b) l'étrier (19) formant ressort peut être soulevé en entraînant le boulon (7) pour venir dans une position de desserrage, dans laquelle le boulon peut être sorti de l'ouvert (9) du porte-garniture ;
c) l'étrier (19) formant ressort est inséré dans une fente (21) de la tête de boulon et pris entre le fond de la fente d'une part et une broche (25) de sécurité pouvant être introduite sur la tête du boulon ;
d) un tronçon d'extrémité de l'étrier (19) formant ressort est immobilisé sur le maintien de garniture ;
e) le tronçon d'extrémité de l'étrier (19) formant ressort, opposé au boulon, est mobile entre une position de desserrage soulevée et une position de blocage abaissée;

5. Fixation de garniture de frein suivant la revendication 3 ou 4, **caractérisée en ce que** le tronçon d'extrémité, mobile librement, de l'étrier (19) formant ressort peut étre bloqué en position soulevée de desserrage sur la face supérieure du porte-garniture (1).

6. Fixation de garniture de frein suivant la revendication 4 ou 5, **caractérisée en ce que** l'extrémité (29) du tronçon d'extrémité libre de l'étrier (19) formant ressort peut être bloquée en la position soulevée de desserrage sur un épaulement (33) de la face supérieure du porte-garniture.

7. Fixation de garniture de frein suivant l'une des revendications précédentes, **caractérisée en ce que** le boulon (7) est guidé dans un alésage à échelons du maintien (1) de garniture de façon à ce que le tronçon (17) du boulon, tourné vers l'ouverture (9), ait un diamètre plus grand que le tronçon (15) du boulon opposé portant fétrier (19) formant ressort et qui se termine en tête de boulon.

8. Fixation de garniture de frein suivant la revendication 7, **caractérisée en ce que** les deux tronçons (15, 17) du boulon **(7)** sont guidés à coulissement dans des douilles (11, 13) enfoncées dans le maintien de garniture.

9. Fixation de garniture de frein suivant l'une des revendications précédentes, **caractérisée par** un deuxième ressort (35) bloquant le boulon (9) en direction de l'ouverture (9) du porte-garniture.

10. Fixation de garniture de frein suivant la revendication 9, **caractérisée par**. les caractéristiques suivantes:
a) le ressort (35) entoure le tronçon (15) de boulon ayant le diamètre le plus petit;
b) le ressort s'appui d'une part sur une face inférieure de la douille (11) guidant le tronçon (15) du boulon et d'autre part sur la face supérieure du tronçon (17) de boulon de diamétre plus grand, de façon à ce que le ressort (35) puisse bloquer, en agissant que l'étrier (19) formant ressort, le boulon (17) dans I'ouverture (9) prévue dans le port-garniture.

11. Fixation de garniture de frein suivant l'une des revendications précédentes, **caractérisée en ce que** la profondeur de pénétration du boulon (7) par rapport à l'ouverture (9) prévue dans le porte-garniture est déterminée par un épaulement (37) constitué sur le boulon.

12. Fixation de garniture de frein suivant l'une des revendications précédentes, **caractérisée en ce que** le deuxiéme ressort (35) peut étre tendu par soulèvement du boulon (7) au moyen de l'étrier (19) formant ressort.

13. Fixation de garniture de frein suivant l'une des revendications précédentes, **caractérisée en ce que** le boulon (7) est guidé sur le maintien de garniture (1) à l'extrémité intérieure tournée vers l'avant de celui-ci;

14. Fixation de garniture de frein suivant la revendication 1, caradérisée en ce que le boulon (7) est boulonné dans un taraudage du porte-garniture (1) et peut être introduit par rotation dans l'ouverture (9) du porte-garniture et peut être soulevé hors de l'ouverture.

15. Fixation de garnitures de freins **caractérisée par** un ressort (41) entourant le boulon (7) et le bloquant dans la direction de l'ouverture (8) du porte-garniture.
